# FASCICULE DE BREVET EUROPEEN

(11) **EP 3 319 814 B1**
(45) Date de publication et mention de la délivrance du brevet: **03.04.2019**
(21) Numéro de dépôt: 16736829.9
(22) Date de dépôt: 05.07.2016
(51) Int. Cl.: B60C 7/12, B60C 7/14, B60C 7/10

(54) **DISPOSITIF DE TYPE PNEUMATIQUE POUR VEHICULE**
REIFENARTIGE VORRICHTUNG FÜR EIN FAHRZEUG
TYRE-TYPE DEVICE FOR A VEHICLE

(30) Priorité: 06.07.2015 FR 1556380
(43) Date de publication de la demande: 16.05.2018
(73) Titulaire: Compagnie Générale des Etablissements Michelin, 63000 Clermont-Ferrand (FR)
(72) Inventeur: VILCOT, Florian, 63040 Clermont-Ferrand Cedex 9 (FR); RIGO, Sébastien, 63040 Clermont-Ferrand Cedex 9 (FR); BEAULATON, Daniel, 63040 Clermont-Ferrand Cedex 9 (FR)
(74) Mandataire: Millanvois, Patrick Jacques Jean
(86) Numéro de dépôt international: PCT/EP2016/065760
(87) Numéro de publication internationale: WO 2017/005713

(56) Documents cités:
- WO-A1-02/083435
- WO-A1-2005/007422
- FR-A1- 2 921 011

## Description

La présente invention concerne un dispositif de type pneumatique, destiné à équiper un véhicule. Ce dispositif de type pneumatique est conçu préférentiellement pour des véhicules de tourisme, mais peut être utilisé sur tout autre type de véhicule tels que des véhicules à deux roues, des véhicules poids lourds, agricoles, de génie civil ou des avions ou, plus généralement, sur tout dispositif roulant.

Un pneumatique classique est une structure torique, destinée à être montée sur une jante, pressurisée par un gaz de gonflage et écrasée sur un sol sous l'action d'une charge. Le pneumatique possède en tout point de sa surface de roulement, destinée à entrer en contact avec un sol, une double courbure: une courbure circonférentielle et une courbure méridienne. Par courbure circonférentielle, on entend une courbure dans un plan circonférentiel, défini par une direction circonférentielle, tangente à la surface de roulement du pneumatique selon la direction de roulement du pneumatique, et une direction radiale, perpendiculaire à l'axe de rotation du pneumatique. Par courbure méridienne, on entend une courbure dans un plan méridien ou radial, défini par une direction axiale, parallèle à l'axe de rotation du pneumatique, et une direction radiale, perpendiculaire à l'axe de rotation du pneumatique.

Dans ce qui suit, l'expression «radialement intérieur, respectivement radialement extérieur» signifie «plus proche, respectivement plus éloigné de l'axe de rotation du pneumatique». L'expression «axialement intérieur, respectivement axialement extérieur» signifie «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

Il est connu que la mise à plat du pneumatique sur un sol horizontal, dans un plan circonférentiel et dans un plan méridien, est conditionnée par les valeurs des rayons de courbure respectivement circonférentiel et méridien, au niveau des points de la surface de roulement positionnés aux limites de l'aire de contact du pneumatique avec le sol. Cette mise à plat est d'autant plus facilitée que ces rayons de courbure sont grands, c'est-à-dire que les courbures sont petites, la courbure en un point, au sens mathématique, étant l'inverse du rayon de courbure. Il est également connu que la mise à plat du pneumatique impacte les performances du pneumatique, en particulier la résistance au roulement, l'adhérence, l'usure et le bruit.

Par conséquent, l'homme du métier, spécialiste du pneumatique, cherchant à obtenir le bon compromis entre les performances attendues du pneumatique telles que, de façon non exhaustive, l'usure, l'adhérence, l'endurance, la résistance au roulement et le bruit, a développé des solutions alternatives au pneumatique classique pour optimiser sa mise à plat.

Un pneumatique classique de l'état de la technique a généralement une grande courbure méridienne, c'est-à-dire un petit rayon de courbure méridien, au niveau des extrémités axiales de la bande de roulement, appelées épaules, lorsque le pneumatique, monté sur sa jante de montage et gonflé à sa pression d'utilisation recommandée, est soumis à sa charge de service. La jante de montage, la pression d'utilisation et la charge de service sont définies par des normes, telles que, par exemple, les normes de la European Tyre and Rim Technical Organisation (ETRTO). Un pneumatique classique porte la charge appliquée, essentiellement par les extrémités axiales de la bande de roulement, ou épaules, et par les flancs reliant la bande roulement à des bourrelets assurant la liaison mécanique du pneumatique avec sa jante de montage. Il est connu qu'une mise à plat méridienne d'un pneumatique classique, avec une petite courbure méridienne au niveau des épaules, est généralement difficile à obtenir.

Le document US 4235270 décrit un pneumatique ayant un corps annulaire en matériau élastomérique, comprenant une partie cylindrique radialement extérieure, à la périphérie du pneumatique, pouvant comprendre une bande de roulement, et une partie cylindrique radialement intérieure, destinée à être montée sur une jante. Une pluralité de parois, espacées selon la direction circonférentielle, s'étendent depuis la partie cylindrique radialement intérieure jusqu'à la partie cylindrique radialement extérieure, et assurent le port de la charge. En outre, des flancs peuvent relier les deux parties cylindriques respectivement radialement intérieure et radialement extérieure, pour former, en association avec la bande de roulement et les flancs, une cavité fermée et permettre ainsi la pressurisation du pneumatique. Un tel pneumatique a toutefois une masse élevée, par rapport à un pneumatique classique, et, en raison de son caractère massif, est susceptible de dissiper une énergie élevée, pouvant limiter son endurance, et donc sa durée de vie.

Le document WO 2009087291 décrit une structure pneumatique comprenant deux viroles annulaires respectivement interne, ou radialement intérieure, et externe, ou radialement extérieure, reliées par deux flancs et par une structure porteuse. Selon cette invention, la structure porteuse est pressurisée et partage le volume annulaire du pneumatique en une pluralité de compartiments ou d'alvéoles, et les flancs sont liés ou intégrés à la structure porteuse. Dans ce cas, la charge appliquée est portée à la fois par la structure porteuse et les flancs. La répartition de pression dans l'aire de contact n'est pas homogène dans la largeur axiale de l'aire de contact, avec des surpressions au niveau des épaules dues à la difficulté de mise à plat méridienne en raison de la liaison entre les flancs et la structure porteuse. Ces surpressions au niveau des épaules sont susceptibles de générer une usure importante des épaules de la bande de roulement.

Un dispositif de type pneumatique selon le préambule de la revendication 1 est divulgué par le documents WO 2005007422 et FR 2921011.

Le document WO 2005007422 décrit une roue adaptative comprenant une bande adaptative et une pluralité de rayons s'étendant radialement vers l'intérieur depuis la bande adaptative jusqu'à un moyeu. La bande adaptative est destinée à s'adapter à la surface de contact avec un sol et à envelopper les obstacles. Les rayons transmettent la charge portée entre la bande adaptative et le moyeu, grâce à la mise en tension des rayons qui ne sont pas en contact avec le sol. Une telle roue adaptative nécessite une optimisation de la répartition des rayons pour garantir une périphérie sensiblement cylindrique. De plus, une roue adaptative a une masse relativement élevée par rapport à un pneumatique classique.

La présente invention a pour objectif de proposer un dispositif de type pneumatique avec une mise à plat améliorée de sa bande de roulement, lorsqu'il est soumis à une charge.

Ce but a été atteint, selon l'invention, par un dispositif de type pneumatique, destiné à équiper un véhicule, comprenant:
- une structure de révolution radialement extérieure dont l'axe de révolution est l'axe de rotation du dispositif de type pneumatique et destinée à entrer en contact avec un sol par l'intermédiaire d'une bande de roulement comprenant au moins un matériau élastomérique, la structure de révolution radialement extérieure ayant deux extrémités axiales et une face radialement intérieure ayant une surface S, et la structure de révolution radialement extérieure comprenant une armature circonférentielle de renforcement,
- une structure de révolution radialement intérieure, coaxiale à la structure de révolution radialement extérieure et destinée à assurer la liaison du dispositif de type pneumatique avec un moyen de montage sur le véhicule, la structure de révolution radialement intérieure ayant deux extrémités axiales et une face radialement extérieure, et la structure de révolution radialement intérieure comprenant au moins un matériau polymérique,
- un espace annulaire intérieur ayant une hauteur radiale moyenne H et radialement délimité par la face radialement intérieure de la structure de révolution radialement extérieure et par la face radialement extérieure de la structure de révolution radialement intérieure,
- une structure porteuse constituée par une pluralité d'éléments porteurs identiques, deux à deux indépendants, c'est-à-dire non liés mécaniquement entre eux, dans l'espace annulaire intérieur, les éléments porteurs s'étendant continûment à partir de la face radialement intérieure de la structure de révolution radialement extérieure, jusqu'à la face radialement extérieure de la structure de révolution radialement intérieure, de telle sorte que, lorsque le dispositif de type pneumatique est soumis à une charge radiale nominale Z et est en contact avec un sol plan par une surface de contact A, les éléments porteurs, reliés à la portion de structure de révolution radialement extérieure en contact avec le sol, sont soumis à un flambage en compression et au moins une partie des éléments porteurs, reliés à la portion de la structure de révolution radialement extérieure non en contact avec le sol, sont en tension,
- les éléments porteurs de la structure porteuse étant filaires,
- les éléments porteurs de la structure porteuse étant reliés à la face radialement intérieure de la structure de révolution radialement extérieure par un tissu radialement extérieur, recouvrant au moins en partie ladite face radialement intérieure sur une surface de liaison S_{E}, et étant reliés à la face radialement extérieure de la structure de révolution radialement intérieure par un tissu radialement intérieur, recouvrant au moins en partie ladite face radialement extérieure, l'ensemble constitué par la structure porteuse, le tissu radialement extérieur et le tissu radialement intérieur étant une structure sandwich,
- la densité surfacique moyenne D des éléments porteurs par unité de surface de structure de révolution radialement extérieure, exprimée en 1/m², étant au moins égale à (S/S_{E})*Z/(A*Fᵣ), où S est la surface, en m², de la face radialement intérieure de la structure de révolution radialement extérieure, S_{E} est la surface de liaison, en m², du tissu radialement extérieur avec la face radialement intérieure de la structure de révolution radialement extérieure, Z est la charge radiale nominale, en N, appliquée au dispositif de type pneumatique, A est la surface de contact au sol, en m², du dispositif de type pneumatique, et Fᵣ la force à rupture, en N, d'un élément porteur,
- le dispositif de type pneumatique comprenant deux flancs, reliant deux à deux les extrémités axiales des structures de révolution respectivement radialement extérieure et radialement intérieure et délimitant axialement l'espace annulaire intérieur, de telle sorte que l'espace annulaire intérieur constitue une cavité fermée pouvant être pressurisée par un gaz de gonflage.

Un dispositif de type pneumatique selon l'invention comprend essentiellement deux structures de révolution respectivement radialement extérieure et radialement intérieure, séparées par un espace annulaire intérieur et reliées par une structure porteuse.

Le principe d'un dispositif de type pneumatique selon l'invention est d'avoir une structure porteuse, constituée d'éléments porteurs identiques, deux à deux indépendants dans l'espace annulaire intérieur, et capable de porter la charge appliquée au dispositif de type pneumatique par la mise en tension d'une partie des éléments porteurs positionnés en dehors de l'aire de contact, les éléments porteurs positionnés dans l'aire de contact étant soumis à flambage en compression et ne participant donc pas au port de la charge appliquée.

La structure porteuse est constituée par une pluralité d'éléments porteurs identiques, c'est-à-dire dont les caractéristiques géométriques et les matériaux constitutifs sont identiques.

Les éléments porteurs sont deux à deux indépendants dans l'espace annulaire intérieur, c'est-à-dire non liés mécaniquement entre eux dans l'espace annulaire intérieur, de telle sorte qu'ils ont des comportements mécaniques indépendants. Par exemple, ils ne sont pas liés entre eux de façon à former un réseau ou un treillis.

Chaque élément porteur s'étend continûment à partir de la face radialement intérieure de la structure de révolution radialement extérieure jusqu'à la face radialement extérieure de la structure de révolution radialement intérieure, c'est-à-dire selon une trajectoire comprenant une première extrémité reliée à la face radialement intérieure de la structure de révolution radialement extérieure et une deuxième extrémité reliée à la face radialement extérieure de la structure de révolution radialement intérieure.

Selon une première caractéristique essentielle, les éléments porteurs de la structure porteuse sont filaires, c'est-à-dire des éléments unidimensionnels assimilés à des fils.

Chaque élément porteur peut être caractérisé géométriquement par sa longueur Lp et par sa section moyenne Sp, qui est la moyenne des sections obtenues par la coupe de l'élément porteur par toutes les surfaces cylindriques, coaxiales aux deux structures de révolution respectivement radialement extérieure et radialement extérieure, et radialement comprises entre lesdites deux structures de révolution. Dans le cas le plus fréquent d'une section constante de l'élément porteur, la section moyenne Sp est égale à cette section constante.

La section moyenne Sp de l'élément porteur comprend une plus grande dimension caractéristique L et une plus petite dimension caractéristique E, dont le rapport K=L/E est appelé rapport de forme. A titre d'exemples, une section moyenne Sp circulaire, ayant un diamètre égal à d, a un rapport de forme K=1, une section moyenne Sp rectangulaire, ayant une longueur L et une largeur 1, a un rapport de forme K=L/1, et une section moyenne Sp elliptique, ayant un grand axe A et un petit axe a, a un rapport de forme K=A/a.

Par définition, un élément porteur est dit filaire ou unidimensionnel lorsque que la plus petite dimension caractéristique E de sa section moyenne Sp est au plus égale à 0.02 fois la hauteur radiale moyenne H de l'espace annulaire intérieur et lorsque le rapport de forme K de sa section moyenne Sp est au plus égal à 3.

Une plus petite dimension caractéristique E de la section moyenne Sp de l'élément porteur au plus égale à 0.02 fois la hauteur radiale moyenne H de l'espace annulaire intérieur exclut tout élément porteur massif, ayant un volume important. En d'autres termes, chaque élément porteur a un élancement élevé, selon la direction radiale, lui permettant de flamber au passage dans l'aire de contact. En dehors de l'aire de contact, chaque élément porteur retrouve sa géométrie initiale, car son flambage est réversible. Un tel élément porteur a une bonne tenue à la fatigue.

Un rapport de forme K de sa section moyenne Sp au plus égal à 3 signifie que la plus grande dimension caractéristique L de sa section moyenne Sp est au plus égale à 3 fois la plus petite dimension caractéristique E de sa section moyenne Sp.

Un élément porteur filaire a un comportement mécanique de type filaire, c'est-à-dire qu'il ne peut être soumis qu'à des efforts d'extension ou de compression selon sa ligne moyenne. Parmi les composants couramment utilisés dans le domaine du pneumatique, les renforts textiles, constitués par un assemblage de filés textiles, ou les câbles métalliques, constitués par un assemblage de fils métalliques, peuvent être considérés comme des éléments porteurs filaires, car leur section moyenne Sp étant sensiblement circulaire, le rapport de forme K est égal à 1, donc inférieur à 3.

Il est à noter que tous les éléments porteurs filaires d'une structure porteuse n'ont pas nécessairement des longueurs Lp identiques.

Selon une deuxième caractéristique essentielle, les éléments porteurs de la structure porteuse sont reliés à la face radialement intérieure de la structure de révolution radialement extérieure par un tissu radialement extérieur, recouvrant au moins en partie ladite face radialement intérieure sur une surface de liaison S_{E}, et sont reliés à la face radialement extérieure de la structure de révolution radialement intérieure par un tissu radialement intérieur, recouvrant au moins en partie ladite face radialement extérieure, l'ensemble constitué par la structure porteuse, le tissu radialement extérieur et le tissu radialement intérieur étant une structure sandwich. Ainsi deux tissus respectivement radialement extérieur et radialement intérieur servent d'interfaces entre les éléments porteurs et les structures de révolution respectivement radialement extérieure et radialement intérieure qui ne sont donc pas en contact direct. Par tissu, on entend une structure obtenue par tissage de fils élémentaires pouvant être constitués par divers types de matériaux. Il est à noter que la surface de liaison S_{E} du tissu radialement extérieur avec la face radialement extérieure de la structure de révolution radialement intérieure n'est pas nécessairement identique à la surface S de la face radialement extérieure de la structure de révolution radialement intérieure. Le tissu radialement extérieur n'est pas obligatoirement continu et peut être constitué d'éléments de tissu juxtaposés : dans ce cas, la surface de liaison S_{E} du tissu radialement extérieur avec la face radialement extérieure de la structure de révolution radialement intérieure est la somme des surfaces de liaison des éléments de tissu juxtaposés. En pratique, la surface de liaison S_{E} est au plus égale à la surface S, c'est-à-dire que le tissu radialement extérieur ne recouvre pas nécessairement intégralement la face radialement intérieure de la structure de révolution radialement extérieure. De même, la surface de liaison S_{I} du tissu radialement intérieur avec la face radialement extérieure de la structure de révolution radialement intérieure est au plus égale à la surface S' de la face radialement extérieure de la structure de révolution radialement intérieure, c'est-à-dire que le tissu radialement intérieur ne recouvre pas nécessairement intégralement la face radialement extérieure de la structure de révolution radialement intérieure. Comme pour le tissu radialement extérieur, le tissu radialement intérieur n'est pas obligatoirement continu et peut être constitué d'éléments de tissu juxtaposés : dans ce cas, la surface de liaison S_{I} du tissu radialement intérieur avec la face radialement extérieure de la structure de révolution radialement intérieure est la somme des surfaces de liaison des éléments de tissu juxtaposés.

Cette conception permet avantageusement d'avoir une structure sandwich pouvant être fabriquée de façon indépendante et intégrée d'un seul bloc lors de la fabrication du dispositif de type pneumatique. La structure sandwich ainsi obtenue peut être solidarisée aux structures de révolution respectivement radialement extérieure et radialement intérieure par vulcanisation, collage ou tout autre procédé de liaison des tissus respectivement radialement extérieur et radialement intérieur.

Selon une troisième caractéristique essentielle, la densité surfacique moyenne D des éléments porteurs par unité de surface de structure de révolution radialement extérieure, exprimée en 1/m², étant au moins égale à (S/S_{E})*Z/(A*Fᵣ), où S est la surface, en m², de la face radialement intérieure de la structure de révolution radialement extérieure, S_{E} est la surface de liaison, en m², du tissu radialement extérieur avec la face radialement intérieure de la structure de révolution radialement extérieure, Z est la charge radiale nominale, en N, appliquée au dispositif de type pneumatique, A est la surface de contact au sol, en m², du dispositif de type pneumatique, et Fᵣ la force à rupture, en N, d'un élément porteur.

La charge radiale nominale Z est la charge recommandée pour l'utilisation du dispositif de type pneumatique. La surface de contact au sol A est la surface selon laquelle le dispositif de type pneumatique est écrasé sur le sol sous l'action de la charge radiale nominale Z.

Cette expression traduit, en particulier, le fait que la densité surfacique moyenne D des éléments porteurs par unité de surface de structure de révolution radialement extérieure est d'autant plus forte que la charge radiale nominale Z élevée et/ou que le rapport de surfaces S_{E}/S, représentant le taux de recouvrement de la face radialement intérieure de la structure de révolution radialement extérieure par le tissu radialement extérieur, est faible. La densité surfacique moyenne D des éléments porteurs est d'autant plus faible que la force à rupture en traction Fᵣ d'un élément porteur est élevée.

Un telle densité surfacique moyenne D des éléments porteurs permet, d'une part, aux éléments porteurs en extension en dehors de l'aire de contact de porter la charge radiale nominale Z, et, d'autre part, aux éléments porteurs en compression dans l'aire de contact de garantir une mise à plat de la bande de roulement, à la fois dans un plan circonférentiel et dans un plan méridien, améliorée par rapport aux pneumatiques classiques et aux autres dispositifs de type pneumatique connus de l'état de la technique.

Généralement, la densité surfacique des éléments porteurs est constante à la fois selon la direction circonférentielle et selon la direction axiale, c'est-à-dire que la répartition des éléments porteurs est uniforme à la fois circonférentiellement et axialement : la densité surfacique moyenne D est donc égale à la densité surfacique constante. L'avantage d'une densité surfacique constante est de contribuer à conférer à la bande de roulement une géométrie quasi cylindrique, avec un effet dit de « mise en marguerite » diminué par rapport à d'autres dispositifs de type pneumatique de l'état de la technique.

Toutefois, la densité surfacique des éléments porteurs peut être variable selon la direction circonférentielle et/ou selon la direction axiale, c'est-à-dire que la répartition des éléments porteurs n'est pas nécessairement uniforme circonférentiellement et/ou axialement, d'où l'introduction de la caractéristique de densité surfacique moyenne D.

Selon une quatrième caractéristique essentielle, le dispositif de type pneumatique de l'invention comprend deux flancs, reliant les extrémités axiales des structures de révolution respectivement radialement extérieure et radialement intérieure et délimitant axialement l'espace annulaire intérieur, de telle sorte que l'espace annulaire intérieur constitue une cavité fermée pouvant être pressurisée par un gaz de gonflage.

Les flancs, selon leur conception et, en particulier, selon leur rigidité structurelle, peuvent participer plus ou moins au port de la charge appliquée. Les flancs comprennent généralement au moins un matériau élastomérique et peuvent comprendre éventuellement une armature de renforcement. Les flancs peuvent ou non être liés directement à la structure porteuse. Dans le cas où ils ne sont pas liés directement à la structure porteuse, les flancs ont un comportement mécanique autonome, sans incidence sur le fonctionnement mécanique propre de la structure porteuse. En outre, en combinaison avec les deux structures de révolution respectivement radialement extérieure et radialement intérieure, ils ferment l'espace annulaire intérieur qui constitue alors une cavité fermée pouvant être pressurisée ou non par un gaz de gonflage. Dans le cas d'une pressurisation effective par un gaz de gonflage, le dispositif de type pneumatique présente alors une rigidité pneumatique, due à la pression, qui va également contribuer au port de la charge appliquée. Usuellement, pour une utilisation sur un véhicule de tourisme, la pression est au moins égale à 0.5 bar, de préférence au moins égale à 1 bar. Plus la pression est élevée, plus la contribution de la rigidité pneumatique au port de la charge appliquée est élevée, et, corrélativement, plus la contribution de la rigidité structurelle de la structure porteuse et/ou des flancs et/ou des structures de révolution respectivement radialement extérieure et radialement intérieure au port de la charge appliquée est faible. En l'absence de pressurisation et dans le cas d'une faible rigidité structurelle des flancs, la structure porteuse et les structures de révolution respectivement radialement extérieure et radialement intérieure assurent la totalité du port de la charge, les flancs ne jouant qu'un rôle de protection vis-à-vis des agressions éventuelles par des éléments extérieurs au dispositif de type pneumatique.

La combinaison de ces caractéristiques essentielles permet une mise à plat améliorée de la bande de roulement, en particulier dans un plan méridien, par une augmentation des rayons de courbure méridiens au niveau des extrémités axiales de la bande roulement.

Il en résulte, en particulier, une homogénéisation des pressions dans l'aire de contact au sol, ce qui contribue à une augmentation de la durée de vie en usure et de l'adhérence du dispositif de type pneumatique.

La combinaison de ces caractéristiques essentielles permet également une augmentation des fréquences propres de vibrations du dispositif de type pneumatique, ce qui contribue à l'amélioration du confort vibratoire et acoustique du dispositif de type pneumatique.

Enfin, la résistance au roulement d'un tel dispositif de type pneumatique est sensiblement diminuée, ce qui est favorable à une baisse de la consommation de carburant du véhicule.

La densité surfacique D des éléments porteurs par unité de surface de structure de révolution radialement extérieure, exprimée en 1/m², est avantageusement au moins égale à 3*(S/S_{E})*Z/ (A*Fᵣ). Une densité surfacique plus élevée d'éléments porteurs améliore l'homogénéisation des pressions dans l'aire de contact au sol et garantit un coefficient de sécurité plus élevé vis-à-vis de la charge appliquée et vis-à-vis de l'endurance.

La densité surfacique D des éléments porteurs par unité de surface de structure de révolution radialement extérieure, exprimée en 1/m², est encore plus avantageusement au moins égale à 6*(S/S_{E})*Z/ (A*Fᵣ). Une densité surfacique encore plus élevée d'éléments porteurs améliore encore davantage l'homogénéisation des pressions dans l'aire de contact au sol et permet d'augmenter encore le coefficient de sécurité vis-à-vis de la charge appliquée et vis-à-vis de l'endurance.

La densité surfacique moyenne D des éléments porteurs par unité de surface de structure de révolution radialement extérieure, exprimée en 1/m², est avantageusement au moins égale à 5000.

Avantageusement la surface de liaison S_{E} du tissu radialement extérieur avec la face radialement intérieure de la structure de révolution radialement extérieure est égale à la surface S de la face radialement intérieure de la structure de révolution radialement extérieure, c'est-dire que le tissu radialement extérieur recouvre intégralement la face radialement intérieure de la structure de révolution radialement extérieure. Dans ces conditions, la densité surfacique moyenne D des éléments porteurs minimale est égale à Z/ (A*Fᵣ).

Selon un mode de réalisation préféré du tissu radialement extérieur, le tissu radialement extérieur est un tissu tramé comprenant des entrecroisements d'une première famille de fils, parallèles entre eux et formant, avec une direction circonférentielle XX' du dispositif de type pneumatique, un angle A_{E} au moins égal à 10° et au plus égal à 45°, et d'une deuxième famille de fils, parallèles entre eux, les fils respectifs des deux familles de fils étant symétriques par rapport à un plan équatorial XZ du dispositif de type pneumatique.

Selon un mode de réalisation préféré du tissu radialement intérieur, le tissu radialement intérieur est un tissu tramé comprenant des entrecroisements d'une première famille de fils, parallèles entre eux et formant, avec la direction circonférentielle XX' du dispositif de type pneumatique, un angle A_{I} sensiblement égal à 45°, et d'une deuxième famille de fils, parallèles entre eux, les fils respectifs des deux familles de fils étant symétriques par rapport à un plan équatorial XZ du dispositif de type pneumatique.

De façon générale, un tissu tramé, lors de sa fabrication, est constitué usuellement par des entrecroisements d'une première famille de fils parallèles entre eux, appelés fils de trame, et d'une deuxième famille de fils parallèles entre eux, appelés fils de chaîne, perpendiculaires aux fils de trame. Les caractéristiques mécaniques d'un tel tissu telles que sa rigidité en extension et sa force à rupture en traction, selon le sens de la trame ou celui de la chaîne, dépendent des caractéristiques des fils élémentaires, telles que, pour des fils élémentaires en textile, le titre, exprimé en tex ou g/1000 m, la ténacité, exprimée en cN/ tex, et la contraction standard, exprimée en %, ces fils élémentaires étant répartis selon une densité donnée, exprimée en nombre de fils/dm. Toutes ces caractéristiques sont fonction du matériau constitutif des fils et de la conception de ces fils.

Un tissu tramé tel que précédemment décrit est, dans un premier temps, lié aux extrémités des éléments porteurs en tant qu'élément constitutif de la structure sandwich. Dans le cas le plus général, la structure sandwich comprend ainsi au moins un tissu tramé destiné à être lié, généralement par collage ou vulcanisation, soit à la face radialement intérieure de la structure de révolution radialement extérieure, pour devenir le tissu tramé radialement extérieur, soit à la face radialement extérieure de la structure de révolution radialement intérieure, pour devenir le tissu tramé radialement intérieur.

Que le tissu tramé soit destiné à devenir le tissu tramé radialement extérieur ou le tissu tramé radialement intérieur, il est posé sur une surface cylindrique, de telle sorte que les fils de chaîne et de trame, perpendiculaires entre eux, forment initialement, avec la direction circonférentielle XX' du dispositif de type pneumatique, un angle sensiblement égal à 45°.

Après assemblage de la structure sandwich dans le dispositif de type pneumatique, le dispositif de type pneumatique est conformé, c'est-à-dire le diamètre de la structure de révolution radialement extérieure augmente alors que le diamètre de la structure de révolution radialement intérieure reste constant. Si le tissu tramé est radialement extérieur, sa distance radiale par rapport à l'axe de révolution du dispositif de type pneumatique augmente de façon significative au cours de la conformation, sa longueur circonférentielle augmente et l'angle formé par les fils de chaîne et les fils de trame, avec la direction circonférentielle XX' du dispositif de type pneumatique, initialement égal à 45°, diminue et devient au moins égal à 10° et au plus égal à 45°, après conformation. Si le tissu tramé est radialement intérieur, sa distance radiale par rapport à l'axe de révolution du dispositif de type pneumatique reste quasi constante au cours de la conformation, sa longueur circonférentielle ne varie pas ou peu et l'angle formé par les fils de chaîne et les fils de trame, avec la direction circonférentielle XX' du dispositif de type pneumatique, initialement égal à 45°, reste sensiblement égal à 45°, après conformation.

Selon une variante préférée du mode de réalisation préféré du tissu radialement extérieur, tout élément porteur comprend au moins une portion d'extrémité radialement intérieure intégrée au tissu tramé radialement extérieur et constituée par des entrecroisements par rapport à au moins un fil d'une des deux familles de fils et parallèle à l'autre famille de fils.

Selon une variante préférée du mode de réalisation préféré du tissu radialement intérieur, les éléments porteurs ont au moins une portion d'extrémité radialement intérieure intégrée au tissu tramé radialement intérieur et constituée par des entrecroisements par rapport à au moins un fil d'une des deux familles de fils et parallèle à l'autre familles de fils.

Selon un mode de réalisation préféré de la structure sandwich, la structure sandwich comprend deux tissus respectivement radialement extérieur et radialement intérieur tramés et des éléments porteurs filaires constitués par des fils, dont les portions d'extrémités sont intégrées dans chaque tissu respectivement radialement extérieur et radialement intérieur, parallèlement à l'une des familles de fils du tissu. Une telle structure présente l'avantage de pouvoir être fabriquée en une seule étape de tissage. Selon une variante particulière, plusieurs éléments porteurs filaires sont constitués par un fil continu passant alternativement dans chaque tissu respectivement radialement extérieur et radialement intérieur.

En ce qui concerne la nature des matériaux, la structure porteuse, le tissu radialement extérieur et le tissu radialement intérieur, constituant la structure sandwich, comprennent un matériau polymérique, tel qu'un polyamide aliphatique, un polyamide aromatique ou un polyester, ou un matériau métallique, tel que l'acier, ou un matériau de type verre ou carbone ou toute combinaison des précédents matériaux. Les polymères, en particulier les élastomères, et le métal, tel que l'acier, sont couramment utilisés dans le domaine du pneumatique. Le verre et le carbone sont des matériaux alternatifs envisageables pour une utilisation en pneumatique.

Dans une première variante préférée de matériau, la structure porteuse, le tissu radialement extérieur et le tissu radialement intérieur, constituant la structure sandwich, comprennent un polyester, tel qu'un polyéthylène téréphtalate (PET). Le PET est couramment utilisé dans le domaine du pneumatique, en raison d'un bon compromis entre ses propriétés mécaniques, telles que sa résistance à la rupture en traction, et son coût.

Dans une seconde variante de matériau, la structure porteuse, le tissu radialement extérieur et le tissu radialement intérieur, constituant la structure sandwich, comprennent un polyamide aliphatique, tel qu'un nylon. Le nylon est également couramment utilisé dans le domaine du pneumatique pour les mêmes raisons que le PET.

Préférentiellement la structure sandwich, constituée par la structure porteuse, le tissu radialement extérieur et le tissu radialement intérieur, comprend un matériau unique. Un matériau unique permet d'une part une standardisation de fabrication du matériau et d'autre part une fabrication plus simple de la structure sandwich.

Selon un premier mode de pose de la structure sandwich, la structure sandwich, constituée par la structure porteuse, le tissu radialement extérieur et le tissu radialement intérieur, est constituée par un enroulement hélicoïdal d'une bandelette sur la face radialement extérieure du tissu radialement intérieur, de façon à constituer une juxtaposition de portions de bandelette jointives ou non jointives. Par bandelette, on entend un élément de structure sandwich ayant une largeur axiale limitée, au plus égale à 0.3 fois la largeur axiale de la structure sandwich globale, et de grande longueur, de façon à ce que la bandelette à poser puisse être stockée sous forme de rouleau. Une telle bandelette est ainsi déroulée selon une hélice, ayant pour axe de révolution l'axe de révolution du dispositif de type pneumatique, sur la structure de révolution radialement intérieure qui fait fonction de forme de pose. Le nombre de tours d'enroulement hélicoïdal de la bandelette est déterminé par la largeur axiale de structure sandwich visée et par la densité d'éléments porteurs constituant les bandelettes. La pose de la bandelette peut être jointive, c'est-dire que les portions de bandelette sont en contact deux à deux par leurs extrémités axiales, ou non jointives, c'est-à-dire que les extrémités axiales des portions de bandelette sont espacées d'un espace prédéterminé. L'avantage d'une pose en bandelette est l'absence de zones de recouvrement, ou soudures, selon la direction circonférentielle, entre des portions de bandelette, en fin d'enroulement. Dans une conception de type bandelette, la surface de liaison S_{E} du tissu radialement extérieur avec la face radialement intérieure de la structure de révolution radialement extérieure est la somme des surfaces de liaison des éléments de bandelette juxtaposés.

Selon un deuxième mode de pose de la structure sandwich, la structure sandwich, constituée par la structure porteuse, le tissu radialement extérieur et le tissu radialement intérieur, est constituée par un enroulement cylindrique, autour de l'axe de révolution YY' du dispositif de type pneumatique, d'un élément unique ayant une largeur axiale égale à la largeur axiale de la structure sandwich. Dans ce cas, la structure sandwich est déposée selon un seul tour d'enroulement cylindrique, sur la structure de révolution radialement intérieure qui fait fonction de forme de pose. On parle de pose en pleine largeur, puisque la largeur axiale visée de structure sandwich est obtenue en un seul tour d'enroulement. L'avantage d'une pose en pleine largeur est la productivité de fabrication. En revanche, elle implique nécessairement l'existence d'au moins une zone de recouvrement, ou soudure, selon la direction circonférentielle, entre les extrémités circonférentielles de la structure sandwich, en particulier en fin d'enroulement.

Avantageusement, l'angle B formé par un élément porteur, avec une direction radiale ZZ' du dispositif de type pneumatique, est sensiblement nul, pour un élément porteur situé dans le plan équatorial XZ du dispositif de type pneumatique, et est d'autant plus élevé, en valeur absolue, qu'un élément porteur est distant du plan équatorial XZ.

En ce qui concerne les flancs, avantageusement les flancs ne sont pas liés directement à la structure sandwich, de préférence ne sont pas liés directement aux éléments porteurs. Ils peuvent ou non participer au port de la charge, selon leur propre rigidité structurelle. Dans le cas où ils participent au port de la charge, ils ont un comportement mécanique indépendant et n'interfèrent pas dans le comportement mécanique de la structure porteuse. Toutefois, les éléments porteurs positionnés aux extrémités axiales de la structure porteuse peuvent éventuellement être liés ou intégrés aux flancs.

Chaque flanc ayant une longueur curviligne L_{F}, la longueur curviligne L_{F} de chaque flanc est avantageusement au moins égale à 1.05 fois, de préférence, 1.15 fois la hauteur radiale moyenne H de l'espace annulaire intérieur. Encore plus avantageusement, la longueur curviligne L_{F} de chaque flanc est au moins égale à 1.3 fois et au plus égale à 1.6 fois la hauteur radiale moyenne H de l'espace annulaire intérieur. Cette caractéristique de longueur de flanc garantit que la déformation du flanc ne va pas perturber la mise à plat méridienne du dispositif de type pneumatique en raison d'une trop faible courbure.

L'armature circonférentielle de renforcement de la structure de révolution radialement extérieure comprend avantageusement au moins une couche de renforcement comprenant des éléments de renforcement textiles ou métalliques. Pour garantir une rigidité transversale, ou axiale, du dispositif pneumatique, la structure de révolution radialement extérieure comprend une armature de renforcement, comprenant au moins une couche de renforcement constituée par des éléments filaires de renforcement, le plus souvent métalliques ou textiles, enrobés dans un matériau élastomérique. Cette armature de renforcement est le plus souvent radialement intérieure à une bande de roulement. L'ensemble constitué par l'armature de renforcement et de la bande de roulement constitue la virole de révolution radialement extérieure.

La structure de révolution radialement intérieure comprend encore avantageusement, sur une face radialement intérieure, une couche de liaison destinée à être fixée sur le moyen de montage sur le véhicule. La couche de liaison comprend généralement au moins un matériau élastomérique, mais pas nécessairement d'armature de renforcement. La fixation sur le moyen de montage peut être réalisée par les forces de pression résultant du gonflage du dispositif de type pneumatique.

Selon une variante de réalisation, la structure de révolution radialement intérieure comprend sur une face radialement intérieure une couche de liaison destinée à être fixée sur le moyen de montage sur le véhicule, par collage. Une liaison collée permet en particulier d'éviter toute rotation du dispositif de type pneumatique par rapport au moyen de montage sur le véhicule.

L'invention a également pour objet un ensemble monté comprenant un dispositif pneumatique selon l'un des modes de réalisation précédemment décrits, monté sur un moyen de montage sur le véhicule.

Le dispositif de type pneumatique de l'invention peut être fabriqué, par exemple, selon le procédé décrit ci-après. Dans une première étape, la structure sandwich, constituée par la structure porteuse constituée par des éléments filaires reliant deux tissus, destinés à être respectivement solidarisés à la structure de révolution radialement intérieure et à la structure de révolution radialement extérieure, peut être fabriqué par tout procédé connu de fabrication de structure composite de type sandwich, en particulier par tissage. Une fois la structure sandwich réalisée, le dispositif de type pneumatique peut être fabriqué selon les étapes de procédé suivantes :
- enroulement de la structure de révolution radialement intérieure sur un cylindre dont le diamètre est égal à celui du moyen de montage, sur lequel est destiné à être monté le dispositif de type pneumatique,
- enroulement de la structure sandwich sur la structure de révolution radialement intérieure
- mise en place des flancs au niveau des extrémités axiales de la structure sandwich de façon à constituer une cavité fermée,
- mise en pression de ladite cavité fermée, pour déployer la structure sandwich,
- enroulement de la structure de révolution radialement extérieure sur la structure sandwich,
- dépressurisation de la cavité fermée jusqu'à la pression atmosphérique ambiante,
- cuisson du dispositif.

L'ensemble monté selon l'invention peut être réalisé par fixation du dispositif de type pneumatique sur un moyen de montage, tel qu'une jante. Cette fixation peut être réalisée, par exemple, par collage de la face radialement intérieure de la structure de révolution radialement intérieure sur la face radialement extérieure du moyen de montage.

La présente invention sera mieux comprise à l'aide des figures 1 à 6 présentées ci-après:
- Figure 1 : vue en perspective et en coupe partielle d'un dispositif de type pneumatique selon l'invention.
- Figure 2 : vue d'une coupe circonférentielle d'un dispositif de type pneumatique selon l'invention, dans l'état écrasé.
- Figure 3A: vue d'une coupe méridienne d'un dispositif de type pneumatique selon l'invention, dans le cas d'une structure porteuse à éléments porteurs unidimensionnels.
- Figure 3B: vue en perspective d'un élément porteur unidimensionnel.
- Figure 4: vue en perspective et en coupe partielle d'un dispositif de type pneumatique selon un mode de réalisation préféré de l'invention, avec une structure sandwich constituée par enroulement hélicoïdal d'une bandelette.
- Figure 5: vue de face avec coupe partielle de la bande de roulement d'un dispositif de type pneumatique selon un mode de réalisation préféré de l'invention, avec une structure sandwich constituée par enroulement hélicoïdal d'une bandelette.
- Figure 6A: vue en coupe méridienne d'une structure sandwich comprenant deux tissus tramés et une structure porteuse.
- Figure 6B: vue de dessus d'une structure sandwich comprenant deux tissus tramés et une structure porteuse.
- Figure 7: courbes-types comparées de l'évolution de la charge appliquée en fonction de la flèche pour un dispositif de type pneumatique selon l'invention et un pneumatique de référence de l'état de la technique.
- Figure 8: courbes-types comparées de l'évolution de la rigidité de dérive en fonction de la charge appliquée pour un dispositif de type pneumatique selon l'invention et un pneumatique de référence de l'état de la technique.

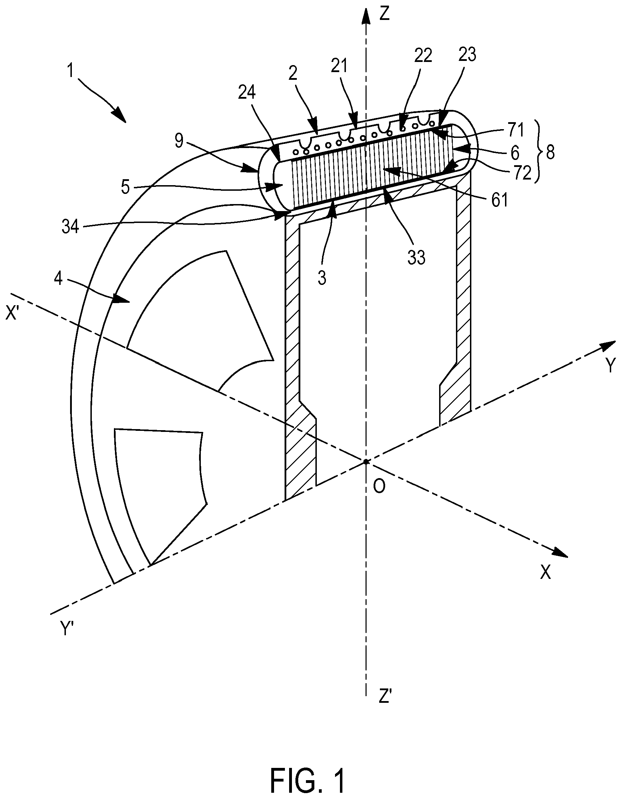

La figure 1 présente une vue en perspective et en coupe partielle d'un dispositif de type pneumatique 1 selon l'invention, monté sur un moyen de montage 4 ou jante, et comprenant une structure de révolution radialement extérieure 2 ayant une face radialement intérieure 23 et deux extrémités axiales 24, une structure de révolution radialement intérieure 3 ayant une face radialement extérieure 33 et deux extrémités axiales 34, un espace annulaire intérieur 5, une structure sandwich 8 comprenant une structure porteuse 6 et deux tissus respectivement radialement extérieur 71 et radialement intérieur 72, et deux flancs 9. La structure de révolution radialement extérieure 2 a un axe de révolution qui est l'axe de rotation YY' du dispositif de type pneumatique et est destinée à entrer en contact avec un sol par l'intermédiaire d'une bande de roulement 21 comprenant au moins un matériau élastomérique. En outre la structure de révolution radialement extérieure 2 comprend une armature circonférentielle de renforcement 22, constituée, dans le cas présent, par une seule couche de renforcement. La structure de révolution radialement intérieure 3, coaxiale à la structure de révolution radialement extérieure 2, est destinée à assurer la liaison du dispositif de type pneumatique 1 avec le moyen de montage 4. La structure de révolution radialement intérieure 3 comprend au moins un matériau polymérique, le plus souvent un mélange élastomérique. L'espace annulaire intérieur 5 est radialement délimité par les structures de révolution respectivement radialement extérieure 2 et radialement intérieure 3. La structure porteuse 6, selon l'invention, est constituée par une pluralité d'éléments porteurs 61, s'étendant continûment à partir de la face radialement intérieure 23 de la structure de révolution radialement extérieure 2 jusqu'à la face radialement extérieure 33 de la structure de révolution radialement intérieure 3, deux à deux indépendants dans l'espace annulaire intérieur 5. Les deux tissus radialement extérieur 71 et radialement intérieur 72 de la structure sandwich 8 sont liés, et le plus souvent collés, respectivement à la face radialement intérieure 23 de la structure de révolution radialement extérieure 2 et à la face radialement extérieure 33 de la structure de révolution radialement intérieure 3. Enfin, le dispositif de type pneumatique 1 comprend deux flancs 9, reliant les extrémités axiales (24, 34) des structures de révolution respectivement radialement extérieure 2 et radialement intérieure 3 et délimitant axialement l'espace annulaire intérieur 5, de telle sorte que l'espace annulaire intérieur 5 constitue une cavité fermée pouvant être pressurisée par un gaz de gonflage.

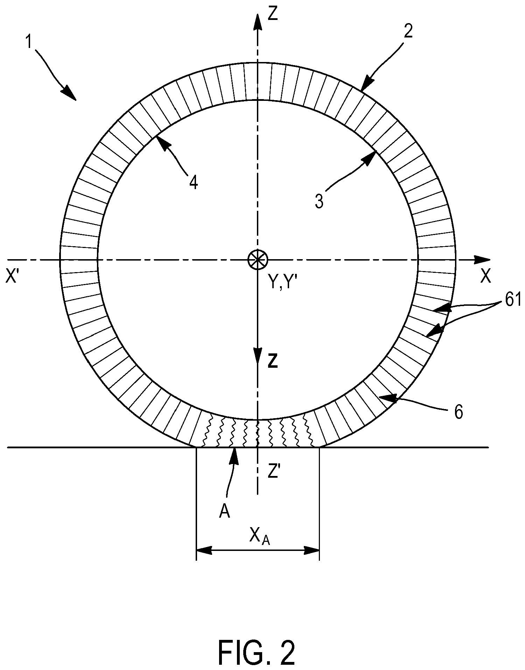

La figure 2 présente une coupe circonférentielle d'un dispositif de type pneumatique 1 selon l'invention, monté sur un moyen de montage 4, dans son état écrasé, c'est-à-dire soumis à une charge radiale nominale Z. La structure porteuse 6 est constituée par une pluralité d'éléments porteurs filaires 61, s'étendant continûment à partir de la structure de révolution radialement extérieure 2 jusqu'à la structure de révolution radialement intérieure 3, deux à deux indépendants dans l'espace annulaire intérieur 5. Le dispositif de type pneumatique 1, soumis à une charge radiale nominale Z, est en contact avec un sol plan par une surface de contact A, ayant une longueur circonférentielle X_{A}. Les éléments porteurs, reliés à la portion de structure de révolution radialement extérieure 2 en contact avec le sol, sont soumis à flambage en compression, alors qu'au moins une partie des éléments porteurs, reliés à la portion de la structure de révolution radialement extérieure 2 non en contact avec le sol, sont en tension.

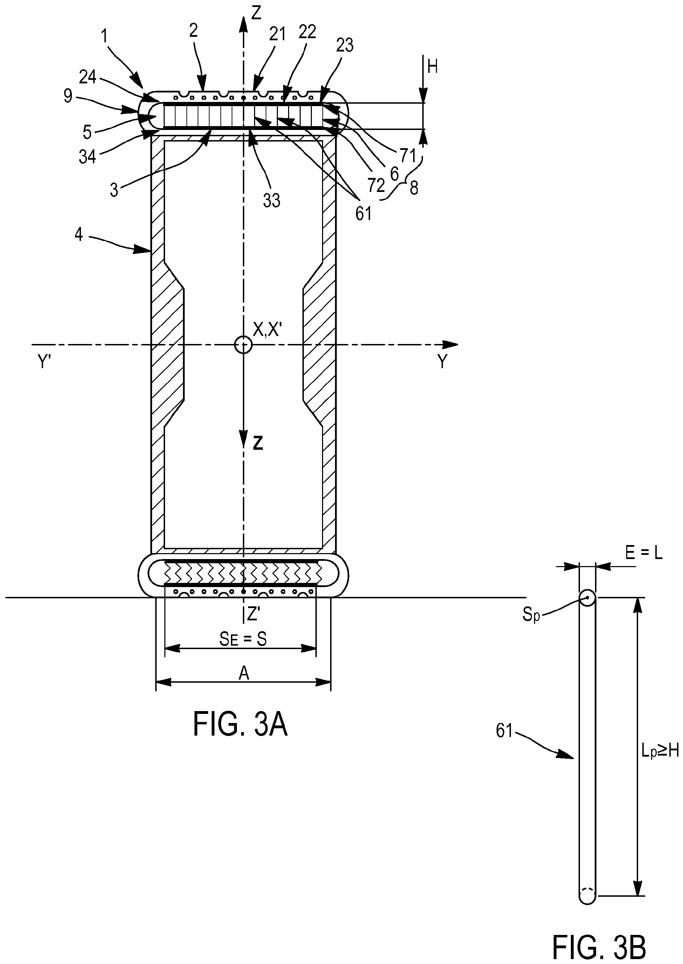

La figure 3A présente une coupe méridienne d'un dispositif de type pneumatique 1 selon l'invention, monté sur un moyen de montage 4. Comme décrit pour la figure 1, le dispositif de type pneumatique 1 comprend une structure de révolution radialement extérieure 2 ayant une face radialement intérieure 23 et deux extrémités axiales 24 et comprenant une bande de roulement 21 et une armature de renforcement 22, une structure de révolution radialement intérieure 3 ayant une face radialement extérieure 33 et deux extrémités axiales 34, un espace annulaire intérieur 5, une structure sandwich 8 comprenant une structure porteuse 6 avec des éléments porteurs filaires 61 et deux tissus respectivement radialement extérieur 71 et radialement intérieur 72, et deux flancs 9. Le dispositif de type pneumatique 1, soumis à une charge radiale nominale Z, est en contact avec un sol plan par une surface de contact A. Comme vu précédemment, les éléments porteurs 61, positionnés à l'opposé de l'aire de contact sont en tension, alors que les éléments porteurs 61, reliés à la portion de structure de révolution radialement extérieure 2 en contact avec le sol, sont soumis à flambage en compression.

La figure 3B présente un élément porteur filaire ou unidimensionnel 61 ayant une section moyenne Sp circulaire, définie par une plus petite dimension caractéristique E et une plus grande dimension caractéristique L toutes deux égales, dans l'exemple présenté, au diamètre du cercle, et caractérisée par son rapport de forme K égal à L/E, donc égal à 1 dans le cas présent. En outre la plus petite dimension caractéristique E de la section moyenne Sp de l'élément porteur 61, c'est-à-dire, dans le cas présent, son diamètre, est au plus égale à 0.02 fois la hauteur radiale moyenne H de l'espace annulaire intérieur 5. L'élément porteur 61 a une longueur Lp au moins égale à la hauteur moyenne H de l'espace annulaire intérieur 5.

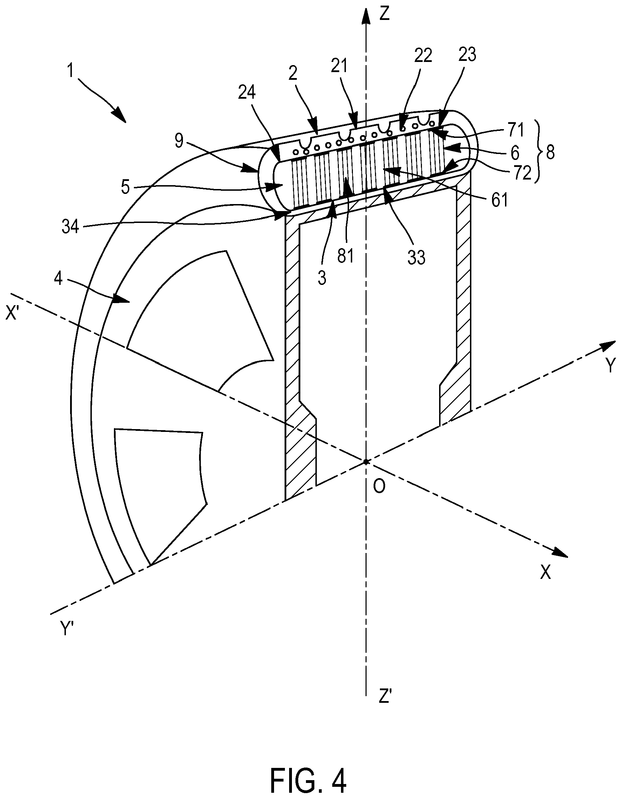

La figure 4 présente une vue en perspective et en coupe partielle d'un dispositif de type pneumatique 1 selon un mode de réalisation préféré de l'invention dans lequel la structure sandwich 8, constituée par la structure porteuse 6, le tissu radialement extérieur 71 et le tissu radialement intérieur 72, est constituée par un enroulement hélicoïdal d'une bandelette 81 sur la face radialement extérieure 33 de la structure de révolution radialement intérieure 3, de façon à constituer une juxtaposition de portions de bandelette. Les autres éléments référencés sur la figure 4 sont identiques à ceux de la figure 1.

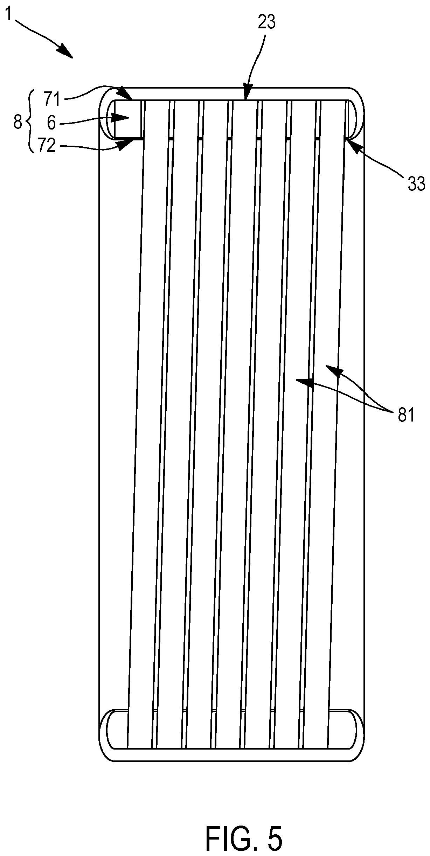

La figure 5 présente une vue de face avec coupe partielle de la bande de roulement d'un dispositif de type pneumatique 1 selon le mode de réalisation préféré de l'invention, présenté en perspective avec coupe partielle sur la figure 4. La figure 5 est une vue avec suppression partielle de la bande de roulement 2 laissant apparaître l'enroulement hélicoïdal d'une bandelette 81 sur la face radialement extérieure 33 de la structure de révolution radialement intérieure 3, de façon à constituer une juxtaposition de portions de bandelette. Cet enroulement hélicoïdal d'une bandelette 81 constitue la structure sandwich 8, constituée par la structure porteuse 6, le tissu radialement extérieur 71 et le tissu radialement intérieur 72.

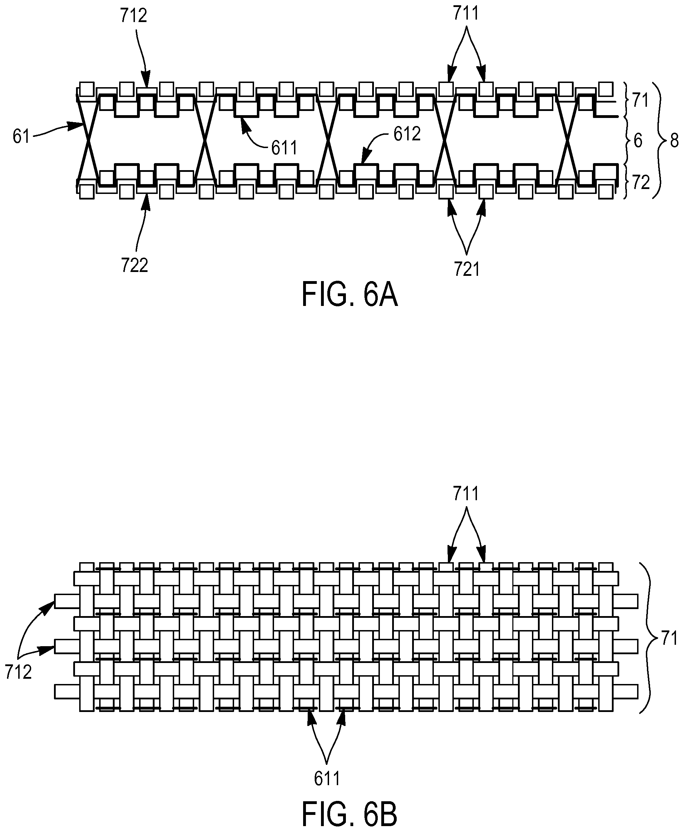

La figure 6A est une vue en coupe méridienne d'une structure sandwich 8 comprenant deux tissus tramés (71, 72) et une structure porteuse 6. Les deux tissus tramés (71, 72) sont destinés à devenir les tissus respectivement radialement extérieur et radialement intérieur, après intégration dans le dispositif de type pneumatique. Chaque tissu tramé (71, 72) est constitué par des entrecroisements perpendiculaires d'une première famille de fils (711, 721), appelés fils de trame, et d'une deuxième famille de fils (712, 722), appelés fils de chaîne. En outre les éléments porteurs 61 de la structure porteuse 6 sont constitués par des fils continus reliant les deux tissus tramés (71, 72) et comprenant des portions (611, 612) entrecroisées avec les fils de trame (711, 721) respectifs desdits tissus tramés (71, 72), parallèles aux fils de chaîne (712, 722) et constituant les extrémités des éléments porteurs 61 intégrées dans chaque tissu. L'avantage d'une telle conception est de pouvoir tisser la structure sandwich en une étape.

La figure 6B présente une vue de dessus d'une structure sandwich 8 comprenant deux tissus tramés (71, 72) et une structure porteuse 6. Le tissus tramé 71 représenté est constitué par des entrecroisements perpendiculaires de la première famille de fils 711, appelés fils de trame, et de la deuxième famille de fils 712, appelés fils de chaîne. En outre, la figure 4B montre des portions de fils 611, entrecroisées avec les fils de trame 711, parallèles aux fils de chaîne 712 et constituant des extrémités des éléments porteurs 61 intégrées dans le tissu tramé 71.

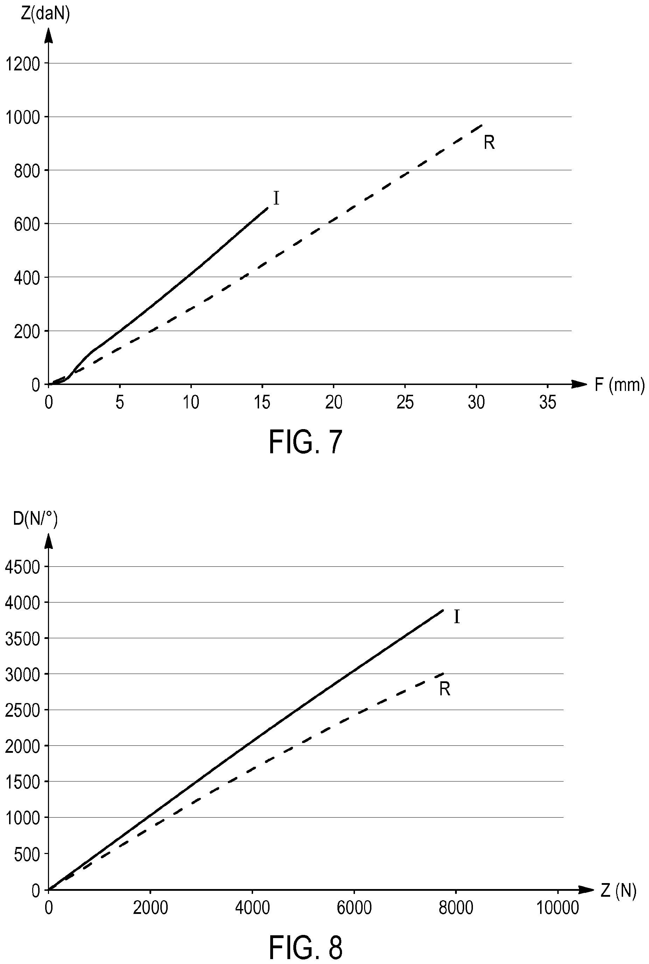

La figure 7 présente deux courbes-types comparées de l'évolution de la charge appliquée Z, exprimée en daN, en fonction de la flèche F, exprimée en mm, pour un dispositif de type pneumatique selon l'invention I et un pneumatique de référence R de l'état de la technique. Cette figure montre que, pour une charge radiale donnée Z, la flèche F d'un dispositif de type pneumatique selon l'invention I est plus petite que celle du pneumatique de référence R. Autrement, la rigidité radiale du dispositif de type pneumatique I est plus grande que la rigidité radiale du pneumatique de référence R.

La figure 8 présente deux courbes-types comparées de l'évolution de la rigidité de dérive, exprimée en N/°, en fonction de la charge appliquée, exprimée en N, pour un dispositif de type pneumatique selon l'invention et un pneumatique de référence de l'état de la technique. Cette figure montre que, pour une charge radiale donnée Z, la rigidité de dérive Z d'un dispositif de type pneumatique selon l'invention I est plus grande que celle du pneumatique de référence R.

L'invention a été plus particulièrement étudiée en tant que solution alternative à un pneumatique classique pour véhicule de tourisme.

Le dispositif de type pneumatique étudié, dont les caractéristiques de rigidités sont présentées sur les figures 5 et 6 précédemment décrites, comprend deux structures de révolution radialement extérieure et radialement intérieure ayant des rayons moyens respectifs égaux à 333 mm et 289 mm, et des largeurs axiales toutes deux égales à 250 mm. L'espace annulaire intérieur, radialement délimité par les structures de révolution respectivement radialement extérieure et radialement intérieure, a une hauteur radiale moyenne H égale à 35 mm. La structure sandwich constituée par la structure porteuse, le tissu radialement extérieur et le tissu radialement intérieur, est en polyéthylène téréphtalate (PET). Chaque élément porteur filaire de la structure porteuse, en polyéthylène téréphtalate (PET), a une section moyenne Sp égale à 7*10⁻⁸ m² et une contrainte à rupture Fᵣ/ Sp égale à 470 MPa. La densité surfacique D des éléments porteurs par unité de surface de structure de révolution radialement extérieure est égale à 85000 fils/m². La structure de type pneumatique, gonflée a une pression P comprise entre 1.5 bar et 2.5 bars, est soumise à une charge radiale Z égale à 600 daN.

Bien que l'invention décrit une structure porteuse constituée par des éléments porteurs filaires identiques, à la fois en rapport de forme K, en structure et en matériau, l'invention peut être étendue à une structure porteuse pouvant être constituée par toute combinaison d'éléments porteurs, telle que, par exemple et de façon non exhaustive:
- des éléments porteurs filaires ayant des rapports de forme K et/ou des structures et/ou des matériaux différents,
- des éléments porteurs filaires répartis selon une densité non uniforme selon la direction axiale et/ou selon la direction circonférentielle.

## Revendications

1. Dispositif de type pneumatique (1), destiné à équiper un véhicule, comprenant:
- une structure de révolution radialement extérieure (2) dont l'axe de révolution est l'axe de rotation (YY') du dispositif de type pneumatique et destinée à entrer en contact avec un sol par l'intermédiaire d'une bande de roulement (21) comprenant au moins un matériau élastomérique, la structure de révolution radialement extérieure (2) ayant deux extrémités axiales (24) et une face radialement intérieure (23) ayant une surface S, et la structure de révolution radialement extérieure (2) comprenant une armature circonférentielle de renforcement (22),
- une structure de révolution radialement intérieure (3), coaxiale à la structure de révolution radialement extérieure (2) et destinée à assurer la liaison du dispositif de type pneumatique avec un moyen de montage (4) sur le véhicule, la structure de révolution radialement intérieure (3) ayant deux extrémités axiales (34) et une face radialement extérieure (33), et la structure de révolution radialement intérieure (3) comprenant au moins un matériau polymérique,
- un espace annulaire intérieur (5) ayant une hauteur radiale moyenne H et radialement délimité par la face radialement intérieure (23) de la structure de révolution radialement extérieure (2) et par la face radialement extérieure (33) de la structure de révolution radialement intérieure (3),
- une structure porteuse (6) constituée par une pluralité d'éléments porteurs identiques (61), deux à deux indépendants, c'est-à-dire non liés mécaniquement entre eux, dans l'espace annulaire intérieur (5), les éléments porteurs s'étendant continûment à partir de la face radialement intérieure (23) de la structure de révolution radialement extérieure (2), jusqu'à la face radialement extérieure (33) de la structure de révolution radialement intérieure (3), de telle sorte que, lorsque le dispositif de type pneumatique est soumis à une charge radiale nominale Z et est en contact avec un sol plan par une surface de contact A, les éléments porteurs (61), reliés à la portion de structure de révolution radialement extérieure (2) en contact avec le sol, sont soumis à un flambage en compression et au moins une partie des éléments porteurs (61), reliés à la portion de la structure de révolution radialement extérieure (2) non en contact avec le sol, sont en tension,
où les éléments porteurs (61) de la structure porteuse (6) sont filaires, **caractérisé en ce que** les éléments porteurs (61) de la structure porteuse (6) sont reliés à la face radialement intérieure (23) de la structure de révolution radialement extérieure (2) par un tissu radialement extérieur (71), recouvrant au moins en partie ladite face radialement intérieure (23) sur une surface de liaison S_{E}, et sont reliés à la face radialement extérieure (33) de la structure de révolution radialement intérieure (3) par un tissu radialement intérieur (72), recouvrant au moins en partie ladite face radialement extérieure (33), l'ensemble constitué par la structure porteuse (6), le tissu radialement extérieur (71) et le tissu radialement intérieur (72) étant une structure sandwich (8), **en ce que** la densité surfacique moyenne D des éléments porteurs (61) par unité de surface de structure de révolution radialement extérieure (2), exprimée en 1/m², est au moins égale à (S/S_{E})*Z/(A*Fᵣ), où S est la surface, en m², de la face radialement intérieure (23) de la structure de révolution radialement extérieure (2), S_{E} est la surface de liaison, en m², du tissu radialement extérieur (71) avec la face radialement intérieure (23) de la structure de révolution radialement extérieure (2), Z est la charge radiale nominale, en N, appliquée au dispositif de type pneumatique, A est la surface de contact au sol, en m², du dispositif de type pneumatique, et Fᵣ la force à rupture, en N, d'un élément porteur (61), **et en ce que** le dispositif de type pneumatique (1) comprend deux flancs (9), reliant deux à deux les extrémités axiales (24, 34) des structures de révolution respectivement radialement extérieure (2) et radialement intérieure (3) et délimitant axialement l'espace annulaire intérieur (5), de telle sorte que l'espace annulaire intérieur (5) constitue une cavité fermée pouvant être pressurisée par un gaz de gonflage.

2. Dispositif de type pneumatique (1) selon la revendication 1, **dans lequel** la densité surfacique D des éléments porteurs (61) par unité de surface de structure de révolution radialement extérieure (2), exprimée en 1/m², est au moins égale à 3*(S/S_{E})*Z/ (A*Fᵣ).

3. Dispositif de type pneumatique (1) selon l'une des revendications 1 ou 2, **dans lequel** la densité surfacique D des éléments porteurs (61) par unité de surface de structure de révolution radialement extérieure (2), exprimée en 1/m², est au moins égale à 6*(S/S_{E})*Z/ (A*Fᵣ).

4. Dispositif de type pneumatique (1) selon l'une quelconque des revendications 1 à 3, **dans lequel** la surface de liaison S_{E}, en m², du tissu radialement extérieur (71) avec la face radialement intérieure (23) de la structure de révolution radialement extérieure (2) est égale à la surface S de de la face radialement intérieure (23) de la structure de révolution radialement extérieure (2).

5. Dispositif de type pneumatique (1) selon l'une quelconque des revendications 1 à 4, **dans lequel** le tissu radialement extérieur (71) est un tissu tramé comprenant des entrecroisements d'une première famille de fils (711), parallèles entre eux et formant, avec une direction circonférentielle (XX') du dispositif de type pneumatique, un angle A_{E} au moins égal à 10° et au plus égal à 45°, et d'une deuxième famille de fils (712), parallèles entre eux, les fils respectifs des deux familles de fils (711, 712) étant symétriques par rapport à un plan équatorial (XZ) du dispositif de type pneumatique.

6. Dispositif de type pneumatique (1) selon les revendications 1 à 5, **dans lequel** le tissu radialement intérieur (72) est un tissu tramé comprenant des entrecroisements d'une première famille de fils (721), parallèles entre eux et formant, avec la direction circonférentielle (XX') du dispositif de type pneumatique, un angle A_{I} sensiblement égal à 45°, et d'une deuxième famille de fils (722), parallèles entre eux, les fils respectifs des deux familles de fils (721, 722) étant symétriques par rapport à un plan équatorial (XZ) du dispositif de type pneumatique.

7. Dispositif de type pneumatique (1) selon la revendication 5, **dans lequel** tout élément porteur (61) comprend au moins une portion d'extrémité radialement extérieure (611) intégrée au tissu tramé radialement extérieur (71) et constituée par des entrecroisements par rapport à au moins un fil d'une des deux familles de fils (711, 712) et parallèle à l'autre famille de fils (711, 712).

8. Dispositif de type pneumatique (1) selon la revendication 6, **dans lequel** les éléments porteurs (61) ont au moins une portion d'extrémité radialement intérieure (612) intégrée au tissu tramé radialement intérieur (72) et constituée par des entrecroisements par rapport à au moins un fil d'une des deux familles de fils (721, 722) et parallèle à l'autre familles de fils (721, 722).

9. Dispositif de type pneumatique (1) selon les revendications 5 à 8, **dans lequel** la structure sandwich (8) comprend deux tissus respectivement radialement extérieur (71) et radialement intérieur (72) tramés et des éléments porteurs (61) filaires constitués par des fils, dont les portions d'extrémités (611, 612) sont intégrées dans chaque tissu respectivement radialement extérieur et radialement intérieur, parallèlement à l'une des familles de fils (711, 712; 721, 722) du tissu.

10. Dispositif de type pneumatique (1) selon l'une quelconque des revendications 1 à 9, **dans lequel** la structure porteuse (6), le tissu radialement extérieur (71) et le tissu radialement intérieur (72), constituant la structure sandwich (8), comprennent un matériau polymérique, tel qu'un polyamide aliphatique, un polyamide aromatique ou un polyester, ou un matériau métallique, tel que l'acier, ou un matériau de type verre ou carbone ou toute combinaison des précédents matériaux.

11. Dispositif de type pneumatique (1) selon l'une quelconque des revendications 1 à 10, **dans lequel** la structure porteuse (6), le tissu radialement extérieur (71) et le tissu radialement intérieur (72), constituant la structure sandwich (8), comprennent un polyester, tel qu'un polyéthylène téréphtalate (PET).

12. Dispositif de type pneumatique (1) selon l'une quelconque des revendications 1 à 10, **dans lequel** la structure porteuse (6), le tissu radialement extérieur (71) et le tissu radialement intérieur (72), constituant la structure sandwich (8), comprennent un polyamide aliphatique, tel qu'un nylon.

13. Dispositif de type pneumatique (1) selon l'une quelconque des revendications 1 à 12, **dans lequel** la structure sandwich (8), constituée par la structure porteuse (6), le tissu radialement extérieur (71) et le tissu radialement intérieur (72), comprend un matériau unique.

14. Dispositif de type pneumatique (1) selon l'une quelconque des revendications 1 à 13, **dans lequel** la structure sandwich (8), constituée par la structure porteuse (6), le tissu radialement extérieur (71) et le tissu radialement intérieur (72), est constituée par un enroulement hélicoïdal d'une bandelette (81) sur la face radialement extérieure (33) de la structure de révolution radialement intérieure (3), de façon à constituer une juxtaposition de portions de bandelette jointives ou non jointives.

15. Dispositif de type pneumatique (1) selon l'une quelconque des revendications 1 à 13, **dans lequel** la structure sandwich (8), constituée par la structure porteuse (6), le tissu radialement extérieur (71) et le tissu radialement intérieur (72), est constituée par un enroulement cylindrique, autour de l'axe de révolution (YY') du dispositif de type pneumatique, d'un élément unique (82) ayant une largeur axiale égale à la largeur axiale de la structure sandwich (8).

16. Dispositif de type pneumatique (1) selon l'une quelconque des revendications 1 à 15, **dans lequel** l'angle B formé par un élément porteur (61), avec une direction radiale (ZZ') du dispositif de type pneumatique, est sensiblement nul, pour un élément porteur (61) situé dans le plan équatorial (XZ) du dispositif de type pneumatique, et est d'autant plus élevé en valeur absolue qu'un élément porteur (61) est distant du plan équatorial (XZ).

17. Dispositif de type pneumatique (1) selon l'une quelconque des revendications 1 à 16, **dans lequel** les flancs (9) ne sont pas liés directement à la structure sandwich (8), de préférence ne sont pas liés directement aux éléments porteurs (61).

18. Dispositif de type pneumatique (1) selon l'une quelconque des revendications 1 à 17, **dans lequel** l'armature circonférentielle de renforcement (22) de la structure de révolution radialement extérieure (2) comprend au moins une couche de renforcement comprenant des éléments de renforcement textiles ou métalliques.

19. Dispositif de type pneumatique (1) selon l'une quelconque des revendications 1 à 18, **dans lequel** la structure de révolution radialement intérieure (3) comprend, sur une face radialement intérieure (32), une couche de liaison (10) destinée à être fixée sur le moyen de montage (4) sur le véhicule.

20. Ensemble monté (1, 4) comprenant un dispositif de type pneumatique (1) selon l'une quelconque des revendications 1 à 19 monté sur un moyen de montage (4) sur le véhicule.

## Patentansprüche

1. Reifenartige Vorrichtung (1), die dazu bestimmt ist, ein Fahrzeug auszurüsten, umfassend:
- eine radial äußere Umdrehungsstruktur (2), deren Umdrehungsachse die Drehachse (YY') der reifenartigen Vorrichtung ist und die dazu bestimmt ist, mit einem Boden mittels eines Laufstreifens (21) in Kontakt zu treten, der mindestens ein Elastomermaterial umfasst, wobei die radial äußere Umdrehungsstruktur (2) zwei axiale Enden (24) und eine radial innere Seite (23) mit einer Fläche S aufweist und die radial äußere Umdrehungsstruktur (2) eine Umfangsarmierung zur Verstärkung (22) umfasst,
- eine radial innere Umdrehungsstruktur (3), die zur radial äußeren Umdrehungsstruktur (2) koaxial ist und dazu bestimmt ist, die Verbindung der reifenartigen Vorrichtung mit einem Mittel zur Montage (4) am Fahrzeug sicherzustellen, wobei die radial innere Umdrehungsstruktur (3) zwei axiale Enden (34) und eine radial äußere Seite (33) aufweist und die radial innere Umdrehungsstruktur (3) mindestens ein Polymermaterial umfasst,
- einen ringförmigen Innenraum (5), der eine mittlere Höhe H aufweist und von der radial inneren Seite (23) der radial äußeren Umdrehungsstruktur (2) und von der radial äußeren Seite (33) der radial inneren Umdrehungsstruktur (3) radial begrenzt wird,
- eine Tragstruktur (6), die von mehreren identischen Tragelementen (61) gebildet ist, die in dem ringförmigen Innenraum (5) paarweise unabhängig, das heißt nicht mechanisch miteinander verbunden sind, wobei sich die Tragelemente durchgehend von der radial inneren Seite (23) der radial äußeren Umdrehungsstruktur (2) bis zur radial äußeren Seite (33) der radial inneren Umdrehungsstruktur (3) derart erstrecken, dass, wenn die reifenartige Vorrichtung einer radialen Nennlast Z ausgesetzt ist und über eine Kontaktfläche A mit einem ebenen Boden in Kontakt steht, die Tragelemente (61), die mit dem Abschnitt der radial äußeren Umdrehungsstruktur (2), der mit dem Boden in Kontakt steht, verbunden sind, einem Knicken unter Druck ausgesetzt sind, und mindestens ein Bereich der Tragelemente (61), die mit dem Abschnitt der radial äußeren Umdrehungsstruktur (2), der nicht mit dem Boden in Kontakt steht, verbunden sind, unter Spannung stehen, wo die Tragelemente (61) der Tragstruktur (6) fadenartig sind, **dadurch gekennzeichnet, dass** die Tragelemente (61) der Tragstruktur (6) mit der radial inneren Seite (23) der radial äußeren Umdrehungsstruktur (2) durch ein radial äußeres Gewebe (71) verbunden sind, das die radial innere Seite (23) zumindest teilweise auf einer Verbindungsfläche S_{E} abdeckt, und mit der radial äußeren Seite (33) der radial inneren Umdrehungsstruktur (3) durch ein radial inneres Gewebe (72) verbunden sind, das die radial äußere Seite (33) zumindest teilweise abdeckt, wobei die Anordnung, die von der Tragstruktur (6), dem radial äußeren Gewebe (71) und dem radial inneren Gewebe (72) gebildet ist, eine Sandwichstruktur (8) ist, dadurch, dass die mittlere Flächendichte D der Tragelemente (61) pro Flächeneinheit einer radial äußeren Umdrehungsstruktur (2), die in 1/m² ausgedrückt wird, mindestens gleich (S/S_{E}) *Z/ (A*Fᵣ) ist, wobei S die Fläche in m² der radial inneren Seite (23) der radial äußeren Umdrehungsstruktur (2), S_{E} die Verbindungsfläche in m² des radial äußeren Gewebes (71) mit der radial inneren Seite (23) der radial äußeren Umdrehungsstruktur (2), Z die radiale Nennlast in N, die auf die reifenartige Vorrichtung aufgebracht wird, A die Bodenkontaktfläche in m² der reifenartigen Vorrichtung und Fᵣ die Bruchkraft in N eines Tragelements (61) ist, und dadurch, dass die reifenartige Vorrichtung (1) zwei Flanken (9) umfasst, die die axialen Enden (24, 34) der radial äußeren (2) bzw. radial inneren (3) Umdrehungsstruktur paarweise verbinden und den ringförmigen Innenraum (5) axial begrenzen, so dass der ringförmige Innenraum (5) einen geschlossenen Hohlraum bildet, der durch ein Aufblasgas mit Druck beaufschlagt werden kann.

2. Reifenartige Vorrichtung (1) nach Anspruch 1, wobei die Flächendichte D der Tragelemente (61) pro Flächeneinheit der radial äußeren Umdrehungsstruktur (2), die in 1/m² ausgedrückt wird, mindestens gleich 3*(S/S_{E}) *Z/ (A*Fᵣ) ist.

3. Reifenartige Vorrichtung (1) nach einem der Ansprüche 1 oder 2, wobei die Flächendichte D der Tragelemente (61) pro Flächeneinheit der radial äußeren Umdrehungsstruktur (2), die in 1/m² ausgedrückt wird, mindestens gleich 6*(S/S_{E})*Z/ (A*Fᵣ) ist.

4. Reifenartige Vorrichtung (1) nach einem der Ansprüche 1 bis 3, wobei die Verbindungsfläche S_{E} in m² des radial äußeren Gewebes (71) mit der radial inneren Seite (23) der radial äußeren Umdrehungsstruktur (2) gleich der Fläche S der radial inneren Seite (23) der radial äußeren Umdrehungsstruktur (2) ist.

5. Reifenartige Vorrichtung (1) nach einem der Ansprüche 1 bis 4, wobei das radial äußere Gewebe (71) ein netzartiges Gewebe ist, umfassend Überkreuzungen einer ersten Familie von Fäden (711), die zueinander parallel sind und mit einer Umfangsrichtung (XX') der reifenartigen Vorrichtung einen Winkel A_{E} bilden, der mindestens gleich 10° und höchstens gleich 45° ist, und einer zweiten Familie von Fäden (712), die zueinander parallel sind, wobei die jeweiligen Fäden der zwei Familien von Fäden (711, 712) bezogen auf eine Äquatorialebene (XZ) der reifenartigen Vorrichtung symmetrisch sind.

6. Reifenartige Vorrichtung (1) nach einem der Ansprüche 1 bis 5, wobei das radial äußere Gewebe (72) ein netzartiges Gewebe ist, umfassend Überkreuzungen einer ersten Familie von Fäden (721), die zueinander parallel sind und mit der Umfangsrichtung (XX') der reifenartigen Vorrichtung einen Winkel A_{I} bilden, der im Wesentlichen gleich 45° ist, und einer zweiten Familie von Fäden (722), die zueinander parallel sind, wobei die jeweiligen Fäden der zwei Familien von Fäden (721, 722) bezogen auf eine Äquatorialebene (XZ) der reifenartigen Vorrichtung symmetrisch sind.

7. Reifenartige Vorrichtung (1) nach Anspruch 5, wobei jedes Tragelement (61) mindestens einen radial äußeren Endabschnitt (611) umfasst, der in das radial äußere netzartige Gewebe (71) integriert ist und von Überkreuzungen bezogen auf mindestens einen Faden einer der zwei Familien von Fäden (711, 712) gebildet ist und zu der anderen Familie von Fäden (711, 712) parallel ist.

8. Reifenartige Vorrichtung (1) nach Anspruch 6, wobei die Tragelemente (61) mindestens einen radial inneren Endabschnitt (612) aufweisen, der in das radial innere netzartige Gewebe (72) integriert ist und von Überkreuzungen bezogen auf mindestens einen Faden einer der zwei Familien von Fäden (721, 722) gebildet ist und zu der anderen Familie von Fäden (721, 722) parallel ist.

9. Reifenartige Vorrichtung (1) nach Anspruch 5 bis 8, wobei die Sandwichstruktur (8) zwei netzartige Gewebe, die jeweils radial außen (71) und radial innen (72) gelegen sind, und fadenartige Tragelemente (61), die von Fäden gebildet sind, deren Endabschnitte (611, 612) in jedes radial äußere bzw. radial innere Gewebe parallel zu einer der Familien von Fäden (711, 712; 721, 722) des Gewebes integriert sind, umfasst.

10. Reifenartige Vorrichtung (1) nach einem der Ansprüche 1 bis 9, wobei die Tragstruktur (6), das radial äußere Gewebe (71) und das radial innere Gewebe (72), die die Sandwichstruktur (8) bilden, ein Polymermaterial, wie beispielsweise ein aliphatisches Polyamid, ein aromatisches Polyamid oder einen Polyester, oder ein metallisches Material, wie beispielsweise Stahl, oder ein glas- oder kohlenstoffartiges Material oder jede Kombination der vorhergehenden Materialien umfassen.

11. Reifenartige Vorrichtung (1) nach einem der Ansprüche 1 bis 10, wobei die Tragstruktur (6), das radial äußere Gewebe (71) und das radial innere Gewebe (72), die die Sandwichstruktur (8) bilden, ein Polyester umfassen, wie beispielsweise ein Polyethylenterephthalat (PET).

12. Reifenartige Vorrichtung (1) nach einem der Ansprüche 1 bis 10, wobei die Tragstruktur (6), das radial äußere Gewebe (71) und das radial innere Gewebe (72), die die Sandwichstruktur (8) bilden, ein aliphatisches Polyamid umfassen, wie beispielsweise ein Nylon.

13. Reifenartige Vorrichtung (1) nach einem der Ansprüche 1 bis 12, wobei die Sandwichstruktur (8), die von der Tragstruktur (6), dem radial äußeren Gewebe (71) und dem radial inneren Gewebe (72) gebildet ist, ein einzelnes Material umfasst.

14. Reifenartige Vorrichtung (1) nach einem der Ansprüche 1 bis 13, wobei die Sandwichstruktur (8), die von der Tragstruktur (6), dem radial äußeren Gewebe (71) und dem radial inneren Gewebe (72) gebildet ist, von einer Helixwicklung eines Streifens (81) auf der radial äußeren Seite (33) der radial inneren Umdrehungsstruktur (3) gebildet ist, um eine Aneinanderreihung von Streifenabschnitten, die aneinandergefügt sind oder nicht, zu bilden.

15. Reifenartige Vorrichtung (1) nach einem der Ansprüche 1 bis 13, wobei die Sandwichstruktur (8), die von der Tragstruktur (6), dem radial äußeren Gewebe (71) und dem radial inneren Gewebe (72) gebildet ist, von einer zylindrischen Wicklung eines einzelnen Elements (82) mit einer axialen Länge gleich der axialen Breite der Sandwichstruktur (8) um die Umdrehungsachse (YY') der reifenartigen Vorrichtung gebildet ist.

16. Reifenartige Vorrichtung (1) nach einem der Ansprüche 1 bis 15, wobei der Winkel B, der von einem Tragelement (61) mit einer radialen Richtung (ZZ') der reifenartigen Vorrichtung gebildet ist, für ein Tragelement (61), das in der Äquatorialebene (XZ) der reifenartigen Vorrichtung gelegen ist, im Wesentlichen null ist und einen absoluten Wert aufweist, der umso höher ist, je weiter ein Tragelement (61) von der Äquatorialebene (XZ) entfernt ist.

17. Reifenartige Vorrichtung (1) nach einem der Ansprüche 1 bis 16, wobei die Flanken (9) nicht direkt mit der Sandwichstruktur (8) verbunden sind, vorzugsweise nicht direkt mit den Tragelementen (61) verbunden sind.

18. Reifenartige Vorrichtung (1) nach einem der Ansprüche 1 bis 17, wobei die Umfangsarmierung zur Verstärkung (22) der radial äußeren Umdrehungsstruktur (2) mindestens eine Verstärkungsschicht umfasst, die textile oder metallische Verstärkungselemente umfasst.

19. Reifenartige Vorrichtung (1) nach einem der Ansprüche 1 bis 18, wobei die radial innere Umdrehungsstruktur (3) auf einer radial inneren Seite (32) eine Verbindungsschicht (10) umfasst, die dazu bestimmt ist, an dem Mittel zur Montage (4) am Fahrzeug befestigt zu sein.

20. Montierte Anordnung (1, 4), umfassend eine reifenartige Vorrichtung (1) nach einem der Ansprüche 1 bis 19, die an einem Mittel zur Montage (4) am Fahrzeug montiert ist.

## Claims

1. Tyre-type device (1) intended to equip a vehicle, comprising:
- a radially outer structure of revolution (2), the axis of revolution of which is the axis of rotation (YY') of the tyre-type device and which is intended to come into contact with the ground via a tread (21) comprising at least one elastomeric material, the radially outer structure of revolution (2) having two axial ends (24) and a radially inner face (23) having an area S, and the radially outer structure of revolution (2) comprising a circumferential reinforcement (22),
- a radially inner structure of revolution (3) that is coaxial with the radially outer structure of revolution (2) and is intended to ensure the connection of the tyre-type device with a means (4) for mounting on the vehicle, the radially inner structure of revolution (3) having two axial ends (34) and a radially outer face (33), and the radially inner structure of revolution (3) comprising at least one polymeric material,
- an inner annular space (5) of mean radial height H that is radially delimited by the radially inner face (23) of the radially outer structure of revolution (2) and by the radially outer face (33) of the radially inner structure of revolution (3),
- a bearing structure (6) made up of a plurality of identical bearing elements (61) that are independent in pairs, that is to say are not mechanically connected together, in the inner annular space (5), the bearing elements extending continuously from the radially inner face (23) of the radially outer structure of revolution (2) to the radially outer face (33) of the radially inner structure of revolution (3), such that, when the tyre-type device is subjected to a nominal radial load Z and is in contact with flat ground via an area of contact A, the bearing elements (61) that are connected to that portion of the radially outer structure of revolution (2) that is in contact with the ground are made to buckle under compression and at least some of the bearing elements (61) that are connected to that portion of the radially outer structure of revolution (2) that is not in contact with the ground are under tension,
**wherein** the bearing elements (61) of the bearing structure (6) are filamentary, **characterized in that** the bearing elements (61) of the bearing structure (6) are connected to the radially inner face (23) of the radially outer structure of revolution (2) by a radially outer fabric (71), at least partially covering said radially inner face (23) over a connecting area S_{E}, and are connected to the radially outer face (33) of the radially inner structure of revolution (3) by a radially inner fabric (72), at least partially covering said radially outer face (33), the assembly made up of the bearing structure (6), the radially outer fabric (71) and the radially inner fabric (72) being a sandwich structure (8), **in that** the mean surface density D of the bearing elements (61) per unit area of radially outer structure of revolution (2), expressed in 1/m², is at least equal to (S/S_{E}) *Z/(A*Fᵣ), where S is the area, in m², of the radially inner face (23) of the radially outer structure of revolution (2), S_{E} is the connecting area, in m², of the radially outer fabric (71) with the radially inner face (23) of the radially outer structure of revolution (2), Z is the nominal radial load, in N, applied to the tyre-type device, A is the area of contact with the ground, in m², of the tyre-type device, and Fᵣ is the force at break, in N, of a bearing element (61), **and in that** the tyre-type device (1) comprises two sidewalls (9) that connect, in pairs, the axial ends (24, 34) of the radially outer (2) and radially inner (3) structures of revolution, respectively, and axially delimit the inner annular space (5), such that the inner annular space (5) forms a closed cavity that can be pressurized by an inflation gas.

2. Tyre-type device (1) according to Claim 1, **wherein** the surface density D of the bearing elements (61) per unit area of radially outer structure of revolution (2), expressed in 1/m², is at least equal to 3* (S/S_{E}) *Z/ (A*Fᵣ) .

3. Tyre-type device (1) according to either of Claims 1 and 2, **wherein** the surface density D of the bearing elements (61) per unit area of radially outer structure of revolution (2), expressed in 1/m², is at least equal to 6*(S/S_{E}) *Z/(A*Fᵣ) .

4. Tyre-type device (1) according to any one of Claims 1 to 3, **wherein** the connecting area S_{E}, in m², of the radially outer fabric (71) with the radially inner face (23) of the radially outer structure of revolution (2) is equal to the area S of the radially inner face (23) of the radially outer structure of revolution (2).

5. Tyre-type device (1) according to any one of Claims 1 to 4, **wherein** the radially outer fabric (71) is a woven fabric comprising interlacings of a first family of threads (711) that are mutually parallel and form, with a circumferential direction (XX') of the tyre-type device, an angle A_{E} at least equal to 10° and at most equal to 45°, and of a second family of threads (712) that are mutually parallel, the respective threads of the two families of threads (711, 712) being symmetrical with respect to an equatorial plane (XZ) of the tyre-type device.

6. Tyre-type device (1) according to Claims 1 to 5, **wherein** the radially inner fabric (72) is a woven fabric comprising interlacings of a first family of threads (721) that are mutually parallel and form, with the circumferential direction (XX') of the tyre-type device, an angle A_{I} substantially equal to 45°, and of a second family of threads (722) that are mutually parallel, the respective threads of the two families of threads (721, 722) being symmetrical with respect to an equatorial plane (XZ) of the tyre-type device.

7. Tyre-type device (1) according to Claim 5, **wherein** each bearing element (61) comprises at least one radially outer end portion (611) that is integrated with the radially outer woven fabric (71) and made up of interlacings with respect to at least one thread of one of the two families of threads (711, 712) and parallel to the other family of threads (711, 712).

8. Tyre-type device (1) according to Claim 6, **wherein** the bearing elements (61) have at least one radially inner end portion (612) that is integrated with the radially inner woven fabric (72) and made up of interlacings with respect to at least one thread of one of the two families of threads (721, 722) and parallel to the other family of threads (721, 722).

9. Tyre-type device (1) according to Claims 5 to 8, **wherein** the sandwich structure (8) comprises a radially outer woven fabric (71) and a radially inner woven fabric (72) and filamentary bearing elements (61) made up of threads, the end portions (611, 612) of which are integrated into each radially outer and radially inner fabric, respectively, parallel to one of the families of threads (711, 712; 721, 722) of the fabric.

10. Tyre-type device (1) according to any one of Claims 1 to 9, **wherein** the bearing structure (6), the radially outer fabric (71) and the radially inner fabric (72), which make up the sandwich structure (8), comprise a polymeric material, such as an aliphatic polyamide, an aromatic polyamide or a polyester, or a metal material, such as steel, or a glass- or carbon-type material or any combination of the above materials.

11. Tyre-type device (1) according to any one of Claims 1 to 10, **wherein** the bearing structure (6), the radially outer fabric (71) and the radially inner fabric (72), which make up the sandwich structure (8), comprise a polyester, such as a polyethylene terephthalate (PET).

12. Tyre-type device (1) according to any one of Claims 1 to 10, **wherein** the bearing structure (6), the radially outer fabric (71) and the radially inner fabric (72), which make up the sandwich structure (8), comprise an aliphatic polyamide, such as a nylon.

13. Tyre-type device (1) according to any one of Claims 1 to 12, **wherein** the sandwich structure (8), made up of the bearing structure (6), the radially outer fabric (71) and the radially inner fabric (72), comprises a single material.

14. Tyre-type device (1) according to any one of Claims 1 to 13, **wherein** the sandwich structure (8), made up of the bearing structure (6), the radially outer fabric (71) and the radially inner fabric (72), is made up of a helical winding of a strip (81) on the radially outer face (33) of the radially inner structure of revolution (3), so as to form a juxtaposition of contiguous or non-contiguous strip portions.

15. Tyre-type device (1) according to any one of Claims 1 to 13, **wherein** the sandwich structure (8), made up of the bearing structure (6), the radially outer fabric (71) and the radially inner fabric (72), is made up of a cylindrical winding, about the axis of revolution (YY') of the tyre-type device, of a single element (82) having an axial width equal to the axial width of the sandwich structure (8).

16. Tyre-type device (1) according to any one of Claims 1 to 15, **wherein** the angle B formed by a bearing element (61) with a radial direction (ZZ') of the tyre-type device is substantially zero for a bearing element (61) situated in the equatorial plane (XZ) of the tyre-type device, and is higher in absolute terms, the further a bearing element (61) is from the equatorial plane (XZ).

17. Tyre-type device (1) according to any one of Claims 1 to 16, **wherein** the sidewalls (9) are not directly connected to the sandwich structure (8), and are preferably not directly connected to the bearing elements (61).

18. Tyre-type device (1) according to any one of Claims 1 to 17, **wherein** the circumferential reinforcement (22) of the radially outer structure of revolution (2) comprises at least one reinforcing layer comprising textile or metal reinforcing elements.

19. Tyre-type device (1) according to any one of Claims 1 to 18, **wherein** the radially inner structure of revolution (3) comprises, on a radially inner face (32), a connecting layer (10) intended to be fixed to the means (4) for mounting on the vehicle.

20. Mounted assembly (1, 4) comprising a tyre-type device (1) according to any one of Claims 1 to 19 mounted on a means (4) for mounting on the vehicle.
